# EUROPÄISCHE PATENTSCHRIFT

(11) **EP 4 226 482 B1**
(45) Veröffentlichungstag und Bekanntmachung des Hinweises auf die Patenterteilung: **22.07.2026**
(21) Anmeldenummer: 21816362.4
(22) Anmeldetag: 18.11.2021
(51) Int. Cl.: H02K 5/04, H02K 5/22, H02K 11/33, H02K 5/06, H02K 11/01

(54) **ELEKTROMOTOR FÜR EIN KRAFTFAHRZEUG**
ELECTRIC MOTOR FOR A MOTOR VEHICLE
MOTEUR ÉLECTRIQUE POUR VÉHICULE AUTOMOBILE

(30) Priorität: 19.11.2020 DE 102020214597
(43) Veröffentlichungstag der Anmeldung: 16.08.2023
(73) Patentinhaber: Brose Fahrzeugteile SE & Co. Kommanditgesellschaft, Würzburg, 97076 Würzburg (DE)
(72) Erfinder: KOCH, Kevin, 90766 Fürth (DE); DÜNCHER, Michael, 97076 Würzburg (DE)
(74) Vertreter: FDST Patentanwälte
(86) Internationale Anmeldenummer: PCT/EP2021/082141
(87) Internationale Veröffentlichungsnummer: WO 2022/106540

(56) Entgegenhaltungen:
- CN-A- 110 771 016
- DE-A1- 19 517 667
- US-A1- 2012 104 878
- US-B2- 10 340 767

## Beschreibung

Die Erfindung betrifft einen Elektromotor eines Kraftfahrzeugs.

Kraftfahrzeuge weisen eine Vielzahl von Verstellantrieben auf, die jeweils einen Elektromotor umfassen, mittels dessen ein Verstellteil bewegt wird. Um eine Lenkbewegung bei dem Kraftfahrzeug zu vereinfachen, wird beispielsweise eine elektrische Lenkung, wie eine Servolenkung, verwendet. Hierbei greift ein Elektromotor (Lenkungsmotor) üblicherweise an einem bei einer Lenkung rotierenden Lenkstrang an, mittels dessen eine Zahnstange transversal verbracht wird. Die Zahnstange wiederum ist mit den bei der Lenkung zu bewegenden Rädern des Kraftfahrzeugs gekoppelt. In einer Alternative hierzu greift der Elektromotor direkt an der Zahnstange an und verbringt diese in transversaler Richtung. Mittels des Elektromotors wird bei geeigneter Ansteuerung zudem ein ungewollter Lenkeinschlag vermieden, beispielsweise bei einem Fahren durch ein Schlagloch, wofür die Winkelbewegung des Lenkrads des Kraftfahrzeugs überwacht wird.

Der Elektromotor ist meist als bürstenloser Gleichstrommotor (BLDC) ausgestaltet und weist mehrere elektrische Spulen auf, die mittels einer Elektronik bestromt werden. Bei einem Kurzschluss der einzelnen elektrischen Spulen, beispielsweise aufgrund eines versehentlichen Berührens mit einem elektrisch leitenden Gegenstand, ist es möglich, dass der Elektromotor blockiert, sodass eine Lenkung des Kraftfahrzeugs nicht mehr möglich oder zumindest erschwert ist. Zum Schutz hiervon, sind üblicherweise die einzelnen Komponenten in einem gemeinsamen Gehäuse angeordnet, das vergleichsweise robust ausgestaltet ist. Üblicherweise wird hierbei als Material für das Gehäuse ein Metall verwendet.

Dabei ist es jedoch möglich, dass bei vergleichsweise großen Fertigungstoleranzen die einzelnen Komponenten, wie beispielsweise die elektrischen Spulen, elektrisch mit dem Gehäuse in Kontakt kommen, oder sich zwischen diesen ein Lichtbogen bildet. Auch dies führt zu einer Beeinträchtigung der Funktionsweise des Elektromotors, wie einem Blockieren. Zur Vermeidung hiervon sind daher üblicherweise die einzelnen Komponenten vergleichsweise weit von dem Gehäuseinnenwänden beabstandet und somit zwischen diesen ein Luftspalt gebildet. Infolgedessen ist ein Platzbedarf vergrößert.

Auch ist es erforderlich, dass die einzelnen Bestandteile der Elektronik vor Partikel geschützt werden, die auch zu einer Beeinträchtigung der Funktionsweise der Elektronik führen können. Beispielsweise können derartige Partikel zu einem Kurzschluss zwischen Leiterbahnen einer Leiterplatte der Elektronik führen. Zur Vermeidung hiervon werden üblicherweise sämtliche Komponenten des Elektromotors, insbesondere elektrischen Spulen, vergleichsweise aufwändig vor Montage gesäubert, was Herstellungskosten erhöht. Alternativ oder in Kombination hierzu wird in die Elektronik mit einem Kunststoff umspritzt, was ebenfalls zu erhöhten Herstellungskosten führt. Auch ist auf diese Weise eine Entwärmung der Elektronik erschwert.

In US 2012/104878 A1 ist Pumpenmotorbaugruppe offenbart, die eine Flüssigkeitspumpe mit Antriebskraft versorgen kann. Die Pumpenmotorbaugruppe umfasst einen Rotor, einen Stator, ein Gehäuse, das den Rotor und den Stator aufnimmt, und eine Steuerbaugruppe, die an dem Gehäuse angebracht ist und den Motorbetrieb steuern kann. Die Steuerbaugruppe umfasst eine Füllplatte, die unter einem Fensterabschnitt liegt, um einen Luftspalt entlang einer Unterseite davon zu verhindern, so dass die Anzeige sichtbar ist und gleichzeitig das Risiko einer Kondensationsbildung verringert wird.

Aus US 10 340 767 B2 ist ein Motor bekannt, der einen Rotor mit einer Welle, einen Stator, der radial außerhalb des Rotors angeordnet ist, ein Lager, das auf einer Oberseite des Stators angeordnet ist, ein rohrförmiges Gehäuse, einen Lagerhalter, der auf der Oberseite des Stators angeordnet ist, und eine Stromschieneneinheit, die auf einer Oberseite des Lagerhalters angeordnet ist, umfasst. Das Gehäuse kann eine innere Gehäuseumfangsfläche aufweisen, die so angeordnet ist, dass sie den Stator hält.

Der Erfindung liegt die Aufgabe zugrunde, einen besonders geeigneten Elektromotor eines Kraftfahrzeugs anzugeben, wobei insbesondere Herstellungskosten gesenkt und vorzugsweise eine Qualität erhöht ist.

Erfindung gemäß wird diese Aufgabe durch die Merkmale des Anspruchs 1 gelöst. Vorteilhafte Weiterbildungen und Ausgestaltungen sind Gegenstand der Unteransprüche.

Der Elektromotor ist ein Bestandteil eines Kraftfahrzeugs. Hierfür ist der Elektromotor geeignet, insbesondere vorgesehen und eingerichtet. Das Kraftfahrzeug ist vorzugsweise landgebunden und weist insbesondere eines oder mehrerer Räder auf, mittels derer ein Kontakt zu einer Fahrbahn erfolgt. Insbesondere ist es hierbei möglich, das Kraftfahrzeug im Wesentlichen beliebig auf der Fahrbahn zu positionieren. Mit anderen Worten ist das Kraftfahrzeug nicht schienengeführt. Das Kraftfahrzeug ist beispielsweise ein Nutzkraftwagen, wie ein Lastkraftwagen (Lkw) oder Bus. Besonders bevorzugt jedoch ist das Kraftfahrzeug ein Personenkraftwagen (Pkw).

Der Elektromotor ist geeigneterweise eine Synchronmaschine. Der Elektromotor ist beispielsweise ein bürstenbehafteter Kommutatormotor. Besonders bevorzugt jedoch ist der Elektromotor bürstenlos ausgestaltet und vorzugsweise ein bürstenloser Gleichstrommotor (BLDC). Bevorzugt ist der Elektromotor ein Bestandteil eines Nebenaggregats, wie eines Verstellantriebs. Der Verstellantrieb umfasst ein Verstellteil, das mittels des Elektromotors bei Betrieb entlang eines Verstellwegs verbracht wird.

In einer bevorzugten Ausführungsform der Erfindung ist der Verstellantrieb eine Servolenkung, und das Verstellteil ist insbesondere entweder ein Lenkstrang, mittels dessen eine Zahnstange verbracht wird, oder die Zahnstange selbst, wobei mittels der Zahnstange zumindest eines der etwaigen Räder des Kraftfahrzeugs um eine im Wesentlichen lotrechte Achse verschwenkt wird. Mit anderen Worten ist der Elektromotor ein Lenkungsmotor. Mittels des Lenkungsmotors erfolgt dabei beispielsweise eine Unterstützung einer Lenkbewegung, die durch einen Fahrer des Kraftfahrzeugs erstellt wird. Alternativ hierzu wird die Lenkbewegung durch den Lenkungsmotor selbst erstellt, beispielsweise in Abhängigkeit eines Signals, das durch Assistenzsystemen generiert wurde, und oder in Abhängigkeit einer Betätigung eines Lenkrads, wobei das Lenkrad zum Beispiel lediglich signaltechnisch mit den weiteren Bestandteilen des Lenksystems, wie dem Lenkstrang oder der Zahnstange gekoppelt ist, jedoch nicht mechanisch.

In einer Alternative hierzu ist der Elektromotor ein Bestandteil eines elektrischen Fensterhebers, einer elektromotorischen Sitzverstellung, einer elektromotorisch betriebenen Heckklappe oder eines elektrischen Schiebedachs. In einer weiteren Alternative ist der Elektromotor ein Bestandteil einer Massageeinrichtung eines Fahrzeugsitzes. In einer weiteren Alternative hierzu ist das Nebenaggregat eine Pumpe, wie zum Beispiel eine Schmiermittelpumpe, insbesondere eine Getriebeöl- oder Motorölpumpe. In einer weiteren Alternative ist der Verstellantrieb eine Wasserpumpe, ein Klimakompressor oder eine Gebläseeinheit, wie ein Kühlerlüfter oder ein Heizgebläse (HVAC).

Der Elektromotor weist ein Gehäuse auf, das ein Motorfach und ein Elektronikfach umfasst, die auch als Motorbereich bzw. Elektronikbereich bezeichnet sind. Die beiden Fächer/Bereiche sind mittels einer Gehäusewand getrennt, die ebenfalls ein Bestandteil des Gehäuses ist. Das Gehäuse ist hohlzylindrisch ausgestaltet, und die Gehäusewand ist im Wesentlichen senkrecht zu der Achse des Hohlzylinders angeordnet. Folglich sind die beiden Fächer (Bereiche) jeweils becherartig ausgestaltet. Das Gehäuse ist einstückig, was eine Fertigung erleichtert. Zweckmäßigerweise ist das Gehäuse aus einem Metall gefertigt, wie einem Stahl oder einem Aluminium, also beispielsweise reinem Aluminium oder einer Aluminiumlegierung. Somit ist einerseits ein Gewicht nicht übermäßig erhöht, jedoch eine Robustheit. Vorzugsweise ist das Gehäuse mittels Kaltfliesspressens oder mittels eines Druckgussverfahrens erstellt.

In dem Motorfach ist ein Stator angeordnet. Der Stator umfasst zweckmäßigerweise mehrere elektrische Spulen. Zweckmäßigerweise weist der Stator ein oder mehrere Elemente auf, mittels derer die einzelnen elektrischen Spulen zueinander stabilisiert sind, beispielsweise ein Blechpaket. Insbesondere sind die elektrischen Spulen auf mehrere (elektrische) Phasen aufgeteilt, beispielsweise zwei Phasen oder drei Phasen, wobei jeder der elektrischen Phasen jeweils die gleiche Anzahl an elektrischen Spulen zugeordnet sind. Die elektrischen Phasen wiederum sind beispielsweise zu einer Dreiecks- oder einer Sternschaltung verschaltet. Die Verschaltung erfolgt insbesondere mittels eines Verschaltungsrings des Stators, der insbesondere eine Stirnseite des Stators bildet. Alternativ hierzu erfolgt die Verschaltung der elektrischen Spulen unabhängig von dem Stator.

Vorzugsweise umfasst der Elektromotor zudem einen Rotor, der mittels des Stators bei Betrieb in eine Rotationsbewegung versetzt wird. Der Rotor umfasst zweckmäßigerweise einen oder mehrere Permanentmagneten. Insbesondere umgibt der Stator den Rotor umfangsseitig, sodass der Elektromotor als Innenläufer ausgestaltet ist. Der Rotor ist insbesondere ebenfalls in dem Motorfach angeordnet und vorzugsweise an einer Motorwelle befestigt.

In der Elektronikfach ist eine Elektronik angeordnet, die beispielsweise eine oder mehrere Leiterplatten aufweist. Die Elektronik dient dabei der Bestromung des Stators, insbesondere der elektrischen Spulen, und ist hierfür geeignet, zweckmäßigerweise vorgesehen und eingerichtet. Insbesondere umfasst die Elektronik einen oder mehrere Halbleiterschalter, wie Leistungshalbleiterschalter, beispielsweise Feldeffekttransistoren, zum Beispiel MOSFETs, IGBTs oder GTOs. Die Halbleiterschalter sind zweckmäßigerweise zu einer Brückenschaltung miteinander elektrisch verschaltet, die vorzugsweise auf die Anzahl an etwaigen Phasen des Stators angepasst ist. Insbesondere ist hierbei eine sogenannte B6-Schaltung realisiert.

Die Elektronik ist elektrisch mit dem Stator kontaktiert, wobei die elektrische Kontaktierung mittels einer Anzahl an Phasenanschlüssen erfolgt. Die Anzahl der Pha- senanschlusse ist zweckmäßigerweise-auf-die-Anzahl der etwaigen Phasen des Elektromotors angepasst, und beispielsweise gleich der Anzahl der Phasen, insbesondere wenn die Phasen zu einer Dreiecksschaltung miteinander verschaltet sind. Falls die elektrischen Phasen zu einer Sternschaltung verschaltet sind, ist geeigneterweise die Anzahl der Phasenanschlüsse gleich der Anzahl an Phasen zuzüglich eins (1).

Die Gehäusewand weist mehrere Durchbrüche auf, wobei die Anzahl der Durchbrüche zweckmäßigerweise gleich der Anzahl der Phasenanschlüsse ist. Durch die Durchbrüche ragen die Phasenanschlüsse, wobei insbesondere jedem Durchbruch jeweils einer der Phasenanschlüsse zugeordnet ist. Dabei sind zweckmäßigerweise die Phasenanschlüsse von einem Rand des jeweilige Durchbruchs beabstandet, sodass dort ein elektrischer Kurzschluss vermieden ist. Vorzugsweise ist der Abstand zwischen den Phasenanschlüssen und dem Rand der Durchbrüche größer als 3 mm, 5 mm oder 1 cm. Somit ist auch das Ausbilden eines Lichtbogens dazwischen vermieden. Auch ist dabei kein zusätzliches Element zur elektrischen Isolierung der beiden erforderlich.

Die Phasenanschlüsse sind beispielsweise aus einem Metall erstellt, und vorzugsweise streifenartig. Insbesondere sind die Phasenanschlüsse aus einem Blech gefertigt und vorzugsweise jeweils Kupferblechstreifen. Zweckmäßigerweise sind die Phasenanschlüsse an dem Stator befestigt, sodass bei Montage die Phasenanschlüsse durch die Durchbrüche geführt werden, wenn der Stator in das Motorfach eingeführt wird. Geeigneterweise sind die Phasenanschlüsse jeweils einstückig mit einem Bestandteil des Stators, wie zumindest einer der etwaigen elektrischen Spulen oder eines Verschaltungsrings, der der Verschaltung der einzelnen elektrischen Spulen zu den etwaigen Phasen bzw. zu der etwaigen Dreiecks-/Sternschaltung dient. Im Montagezustand sind die Phasenanschlüsse mit der Elektronik elektrisch kontaktiert, insbesondere mit der etwaigen Brückenschaltung. Zweckmäßigerweise sind die Phasenanschlüsse jeweils als Messerkontakt ausgestaltet und greifen in entsprechend Gegenkontakte der Elektronik ein, was eine Montage erleichtert.

Der Elektromotor umfasst ferner ein Trennelement, das zwischen dem Stator und der Elektronik angeordnet ist. Insbesondere ist das Trennelement parallel zu der Gehäusewand angeordnet. Mittels des Trennelements sind die Durchbrüche und die Gehäusewand jeweils zumindest teilweise abgedeckt. Folglich ist ein zusätzliches Bauteil zwischen dem Stator und der Elektronik vorhanden, wobei mittels des Trennelements die Größe der Durchbrüche verringert wird. Infolgedessen ist ein Durchtritt von Partikeln zwischen dem Motorfach und dem Elektronikfach erschwert, wobei die beispielsweise bei einem Abrieb von in dem Motorfach angeordneten Bestandteilen des Elektromotors entstehen oder nach der Fertigung sich dort befinden.

Zusammenfassend ist auch bei vorhandenen (kritischen) Partikeln ein Partikelaustausch zwischen den beiden Fächern vermieden oder zumindest unwahrscheinlich. Aufgrund des Trennelements ist es somit nicht erforderlich, die einzelnen Bestandteile des Stators und sonstiger, in dem Motorfach angeordneter Bestandteile des Elektromotors umfassend zu säubern, weswegen ein Herstellungsschritt entfallen kann und somit Herstellungskosten reduziert sind. Ferner können diese Bauteile eine größere Restschmutzanforderung aufweisen. Auch ist es möglich, bei dem Gehäuse und den Phasenanschlüssen vergleichsweise große Fertigungstoleranzen zu wählen. Es ist lediglich erforderlich, dass diese im Montagezustand zueinander beabstandet sind. Die Verringerung der Öffnungen zwischen dem Motorfach und dem Elektronikfach erfolgt mittels des Trennelements, wobei lediglich dort ein entsprechender Ausgleich erfolgt. Somit sind Herstellungskosten reduziert. Da ferner lediglich ein Abdecken der Durchbrüche erfolgt, und das Trennelement Element nicht innerhalb der Durchbrüche angeordnet wird, ist es möglich, bei beiden vergleichsweise große Fertigungstoleranzen zu wählen.

Ferner ist es möglich, das Trennelement luftdurchlässig oder zumindest semipermeabel auszugestalten, sodass zuverlässig eine Entlüftung der in dem Motorfach angeordneten Komponenten des Elektromotors erfolgten kann. Da zudem lediglich ein einziges Trennelement vorhanden ist, ist eine Montage vereinfacht, und es ist nicht erforderlich, einzelne Elemente auf jeweils einen zugeordneten Durchbruch anzupassen. Somit sind Herstellungskosten reduziert. Da zudem die Gehäusewand zumindest teilweise mittels des Trennelements abgedeckt ist, ist ein direkter mechanischer Kontakt der Elektronik bzw. des Stators mit der Gehäusewand vermieden, sodass eine Beschädigung dieser vermieden werden kann.

Beispielsweise ist der Querschnitt des Gehäuses im Wesentlichen rund, und die Gehäusewand ist ebenfalls kreisförmig. Zweckmäßigerweise ist in diesem Fall das Trennelement ebenfalls rund/kreisförmig. Hierbei ist beispielsweise der Außendurchmesser des Trennelements größere als der Innendurchmesser des Gehäuses, und das Trennelement weist somit einen umgebogenen Rand auf. Folglich ist eine Abdichtung verbessert. Besonders bevorzugt jedoch ist der Außendurchmesser des Trennelements (geringfügig) geringer als der Innendurchmesser des Gehäuses. Auf diese Weise ist eine Montage erleichtert. Beispielsweise weist der Rand des Trennelements Einkerbungen oder sonstige Merkmale auf. Somit ist einerseits ein Angreifen an dem Trennelement erleichtert und daher eine Montage. Andererseits ist auf diese Weise eine tangentiale Ausrichtung realisiert. Besonders bevorzugt jedoch ist die Außenkontur des Trennelements glatt. Auf diese Weise ist eine Herstellung vereinfacht.

Insbesondere weist die Gehäusewand eine Halterung für ein Lager auf, sodass die Gehäusewand als B-seitiges Lagerschild fungiert. Zweckmäßigerweise umfasst die Gehäusewand einen Kranz, mittels dessen das Lager aufgenommen wird. Somit ist eine Montage vereinfacht. Mittels des Lagers ist vorzugsweise die etwaige Motorwelle gelagert. Beispielsweise endet die Motorwelle an dem Lager. Besonders bevorzugt jedoch ist die Motorwelle mittels des Lagers durch die Gehäusewand geführt, sodass diese endseitig zumindest teilweise in dem Elektronikfach angeordnet ist. Vorzugsweise umfasst hierbei die Elektronik einen Drehzahlgeber, der mit diesem Ende der Motorwelle wechselwirkt. Somit ist eine Ansteuerung des Stators in Abhängigkeit der erfassten Drehzahl der Motorwelle ermöglicht, wobei keine aufwändige Verkabelung erforderlich ist. Geeigneterweise ist das Trennelement ringförmig ausgestaltet, wobei der Innendurchmesser des Trennelements zweckmäßigerweise geringfügig größer als der Außendurchmesser des Kranzes ist. Somit ist auch dort ein Toleranzausgleich gegeben, was eine Montage vereinfacht.

Beispielsweise ist das Trennelement zwischen der Gehäusewand und der Elektronik angeordnet. Besonders bevorzugt jedoch ist das Trennelement zwischen der Gehäusewand und dem Stator angeordnet. Auf diese Weise ist eine direkte Anlage des Stators an der Gehäusewand ausgeschlossen. Auch ist bei einem Einführen der Phasenanschlüsse durch die Trennwand in die Durchbrüche ein Beabstanden des Trennelements von der Gehäusewand unterbunden, wenn die Phasenanschlüsse an dem Stator befestigt sind. Folglich ist eine Robustheit erhöht und eine Montage vereinfacht.

Das Trennelement ist folienartig und weist somit eine Dicke geringer als 0,5 mm oder 0,1 mm auf. Auf diese Weise sind ein Platzbedarf und ein Gewicht im Wesentlichen nicht erhöht. Vorzugsweise ist das Trennelements biegeschlaff ausgestaltet. Auf diese Weise ist ein Toleranzausgleich möglich, nämlich indem das Trennelement verformt wird, insbesondere elastisch. Hierbei ist aufgrund der Biegeschlaffheit ein benötigter Kraftaufwand vergleichsweise gering.

Beispielsweise wird bei Montage ein unversehrtes Trennelement verwendet, und dieses wird mittels der Phasenanschlüsse durchstoßen, sodass sich eine zu der Anzahl an Phasenanschlüssen korrespondierende Anzahl an Hauptschlitzen ergibt, wobei durch jeden der Hauptschlitze einer der Phasenanschlüsse ragt. Somit ist ein Aufwand zur Herstellung des Trennelements verringert. Auch ist auf diese Weise ein Abstimmen der einzelnen Bestandteile aufeinander nicht erforderlich, sodass vergleichsweise große Fertigungstoleranzen gewählt werden können. Alternativ hierzu weist das Trennelement bereits Perforierungen auf, die mittels der Phasenanschlüsse bei Einführen aufgetrennt werden. Somit ist der Hauptschlitz stets auf die tatsächliche Größe der verwendeten Phasenanschlüsse angepasst, und das Trennelement kann für eine Vielzahl unterschiedlicher Elektromotoren verwendet werden. Alternativ hierzu ist bereits vor Durchführen der Phasenanschlüsse in das Trennelement eine zu der Anzahl an Phasenanschlüssen korrespondierendë Anzahl an Hauptschlitzen eingebracht. Zumindest jedoch weist stets das Trennelement eine zu der Anzahl an Phasenanschlüssen korrespondierende Anzahl an Hauptschlitzen auf, wobei durch jeden der Hauptschlitze jeweils einer der Phasenanschlüsse ragt. Somit ist die Größe der Hauptschlitze im Wesentlichen stets auf die Phasenanschlüsse angepasst, weswegen der Durchtritt von Partikeln durch die Durchbrüche mittels des Trennelements sicher verhindert wird. Die Hauptschlitze sind hierbei stets umfangsseitig geschlossen, sodass diese vergleichsweise stabil sind. Auch ist auf diese Weise ein vergleichsweiser großer Teil der Durchbrüche des Trennelements abgedeckt, und das Trennelement ist vergleichsweise stabil ausgestaltet. Alternativ hierzu ist das Trennelement randseitig bis zu den Durchbrüchen ausgespart, sodass eine Montage vereinfacht ist.

Beispielsweise sind die Hauptschlitze stets auf den Querschnitt der Phasenanschlüsse angepasst und/oder beispielsweise im Wesentlichen geradlinig. Besonders bevorzugt mündet in jeden der Hauptschlitze ein weiterer Schlitz, der zumindest teilweise nicht parallel zu dem Hauptschlitz verläuft und mit diesem beispielsweise einen Winkel einschließt, beispielsweise zwischen 10° und 90°. Durch den weiteren Schlitz ragen nicht die Phasenanschlüsse, sondern dieser dient als Toleranzausgleich, sodass ein unkontrolliertes Einreißen des jeweiligen Hauptschlitzes vermieden wird. Folglich ist ein Ausschuss verringert. Der weitere Schlitz mündet beispielsweise endseitig in den Hauptschlitz oder mittig. Insbesondere sind jedem der Hauptschlitze zwei weitere derartige Schlitz zugeordnet, wobei diese geeigneterweise unterschiedlichen Längsseiten des jeweiligen Hauptschlitzes zugeordnet sind. In einer weiteren Alternative sind jeweils mehr als zwei weitere derartige Schlitze vorhanden.

Besonders bevorzugt ist das Trennelement an der Gehäusewand befestigt. Somit ist keine Befestigung des Trennelements an dem Stator oder der Elektronik erforderlich, und diese können separat gefertigt werden. Zum Beispiel werden zur Befestigung Befestigungsmittel, wie Clips, verwendet. Besonders bevorzugt jedoch weist das Trennelement eine Klebeschicht auf, die an der Gehäusewand anhaftet.

Mit anderen Worten erfolgt die Befestigung mittels der Klebeschicht. Folglich ist ein Aufwand verringert.

Vorzugsweise weist das Trennelement zumindest eine elektrisch isolierende Schicht auf. Aufgrund der elektrisch isolierenden Schicht ist ein Kurzschluss, insbesondere ein Masseschluss, mit der Gehäusewand vermieden. Hierbei zweckmäßigerweise das Trennelement zwischen der Gehäusewand und dem Stator angeordnet. Sofern die Klebeschicht vorhanden ist, ist diese zweckmäßigerweise zwischen der elektrisch isolierenden Schicht und der Gehäusewand angeordnet. Die elektrisch isolierende Schicht ist zweckmäßigerweise aus einem Polyester gefertigt. Vorzugsweise ist das Trennelement hierbei folienartig, sodass die elektrisch isolierende Schicht aus einer Polyesterfolie gefertigt ist. Auf diese Weise sind Herstellungskosten reduziert.

Geeigneterweise weist das Trennelement eine Schicht auf, die eine elektrisch abschirmende Wirkung aufweist. Mittels der Schicht werden hierbei elektromagnetische Wellen abgeschirmt. Hierfür ist die elektrische Schicht zweckmäßigerweise elektrisch gegen Masse geführt und beispielsweise mit der Gehäusewand verbunden. Auf diese Weise ist eine elektromagnetische Verträglichkeit erhöht, und es ist nicht erforderlich, die Elektronik entsprechend anzupassen. Somit können hierfür vergleichsweise kostengünstige Komponenten verwendet werden. Alternativ oder in Kombination hierzu weist die Schicht eine magnetisch abschirmende Wirkung auf. Somit weist die Schicht paramagnetischen oder diamagnetische Eigenschaften auf. Auf diese Weise ist ein Ausbilden der mittels des Stators erzeugten Magnetfelder in die Elektronik vermieden oder zumindest verringert, sodass die einzelnen Komponenten der Elektronik nicht entsprechend abgeschirmt werden müssen. Auf diese Weise können somit wiederum vergleichsweise kostengünstige Bauteile verwendet. Zur Bereitstellung der jeweiligen abschirmenden Wirkung ist beispielsweise ein Bestandteil des Trennelements metallisiert und/oder beschichtet, sodass die Schicht erstellt ist. Alternativ hierzu ist die Schicht aus einem Kunststoff oder dergleichen gefertigt, in den Partikel eingebettet sind, mittels derer die entsprechende Wirkung bereitgestellt wird.

Nachfolgend wird die Erfindung anhand einer Zeichnung näher erläutert. Darin zeigen:
- Fig. 1: eine elektrische Lenkung eines Kraftfahrzeugs, mit einem Elektromotor,
- Fig. 2: ausschnittsweise in einer Explosionsdarstellung den ein Trennelement aufweisenden Elektromotor,
- Fig. 3, 4: jeweils in einem Längsschnitt den Elektromotor,
- Fig. 5: in einem Längsschnitt das Trennelement,
- Fig. 6: ausschnittsweise eine alternative Ausgestaltung des Trennelements, und
- Fig. 7-9: jeweils ausschnittsweise weitere Alternativen.

Einander entsprechenden Teile sind in allen Figuren mit den gleichen Bezugszeichen versehen

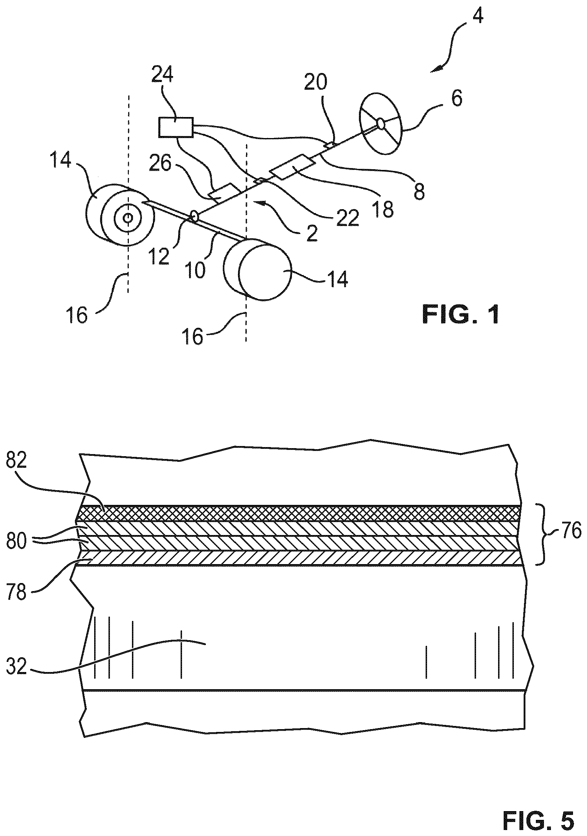

In Fig. 1 ist schematisch vereinfacht ein Verstellantrieb 2 eines Kraftfahrzeugs 4 in Form einer elektrischen Lenkung (Servolenkung) dargestellt. Das Kraftfahrzeug 4 umfasst ein Lenkrad 6, das mittels einer Lenkstange 8 mit einer Zahnstange 10 über ein Ritzel 12 gekoppelt ist. Die Zahnstange 10 ist mit zwei Vorderrädern 14 gekoppelt, die bei einem Lenkeinschlag des Lenkrads 6 jeweils um eine im Wesentlichen lotrecht verlaufende Achse 16 verschwenkt werden sollen. Die Lenkstange 8 ist zweigeteilt, wobei die beiden Teile mittels eines Stabs 18 miteinander verbunden sind. Dem zwischen dem Stabs 18 und dem Lenkrad 6 befindenden Teil der Lenkstange 8 ist ein erster Sensor 20 und dem zwischen dem Ritzel 12 und dem Stabs 18 befindenden Teil der Lenkstange 8 ist ein zweiter Sensor 22 zugeordnet, die signaltechnisch mit einer Steuereinheit 24 verbunden sind.

Dem zwischen dem Ritzel 12 und dem Stab 18 befindenden Teil der Lenkstange 8 ist ferner ein Elektromotor 26 zugeordnet, der mittels der Steuereinheit 24 gesteuert wird, und der als bürstenloser Gleichstrommotor (BLDC) ausgestaltet ist. Hierbei wird ein Winkelversatz zwischen den beiden Teilen der Lenkstange 8 mittels der beiden Sensoren 20, 22 erfasst und somit ein gewünschter Lenkeinschlag der Vorderräder 14 ermittelt. Falls dieser vorhanden ist, wird der Elektromotor 26 derart bestromt, dass die Rotationsbewegung der Lenkstange 8 unterstützt wird.

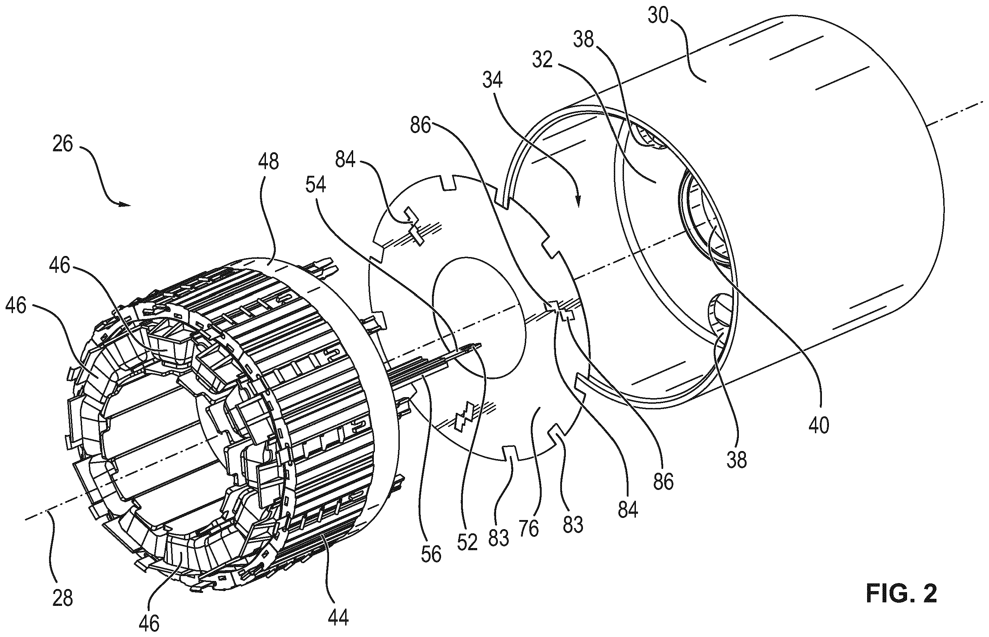

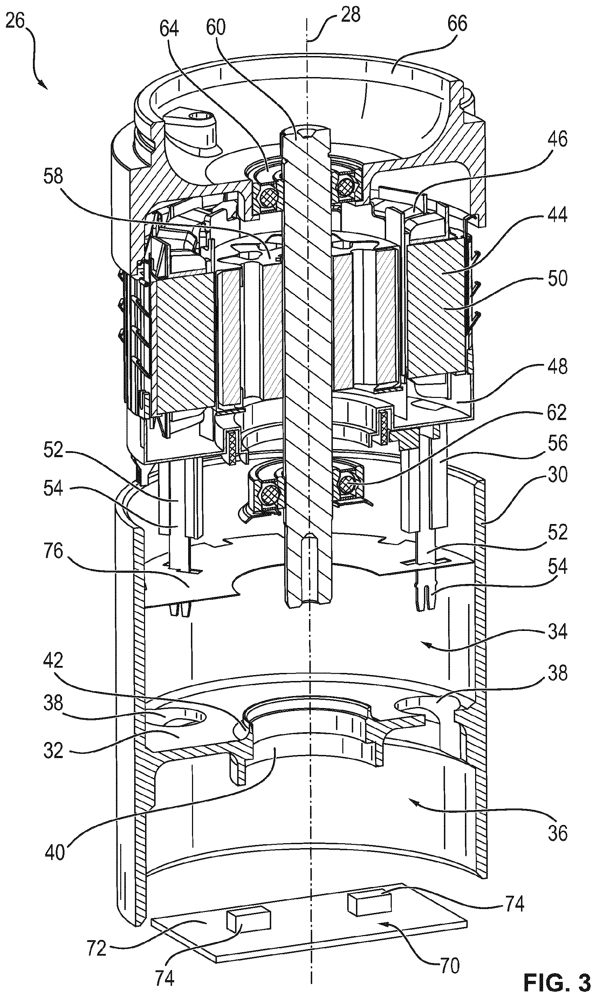

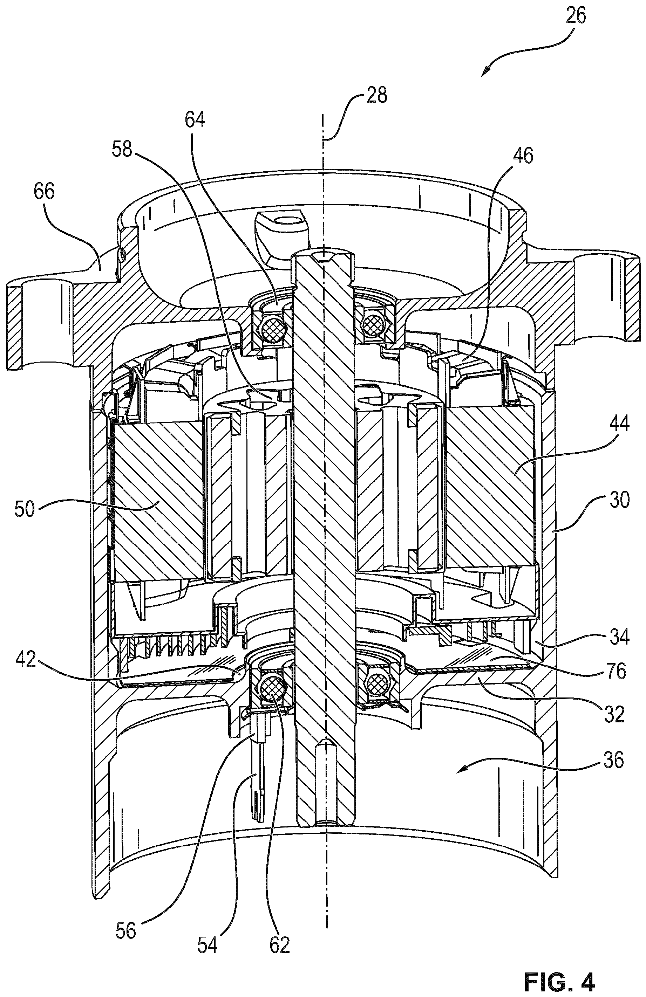

In Figur 2 ist der Elektromotor 26 in einer Explosionsdarstellung ausschnittsweise dargestellt, wobei die einzelnen Bestandteile entlang einer Längsachse 28 auseinandergezogen sind. In Figur 3 ist der Elektromotor 26 in einem Längsschnitt entlang der Längsachse 28 in einem teilweise auseinandergezogen Zustand und in Figur 4 in einem Längsschnitt entlang der Längsachse 28 in zusammengesetzten Zustand dargestellt. Der Elektromotor 26 weist ein Gehäuse 30 auf, das aus einem Aluminium in einem Kaltfliesspressverfahren hergestellt wurde. Das Gehäuse 30 ist im Wesentlichen hohlzylindrisch mit runder Grundfläche ausgestaltet, wobei die Zylinderachse mit der Längsachse 28 zusammenfällt. Das Gehäuse weist eine senkrecht zur Längsachse 28 angeordnete Gehäusewand 32 auf, die einstückig mit dem Hohlzylinder und innerhalb dessen angeordnet ist. Hierbei ist die Gehäusewand 32 zwischen den beiden Enden des Hohlzylinders angeordnet, sodass ein Motorfach 34 und ein Elektronikfach 36 gebildet sind, die mittels der Gehäusewand 32 zueinander getrennt sind.

Die Gehäusewand 32 weist drei Durchbrüche 38 auf, die einen kreisrunden Querschnitt aufweisen, und die das Motorfach 34 und das Elektronikfach 36 miteinander verbinden. Die Durchbrüche 38 sind von der Längsachse 28 weg versetzt, und mittig bezüglich der Längsachse 28 ist in die Gehäusewand 32 eine Aussparung 40 eingebracht, die mittels eines Kranzes 42 begrenzt ist. Der Kranz 42 ist ein hohlzylindrischer Abschnitt, der konzentrisch zu der Längsachse 28 angeordnet ist, und der die Aussparung 40 an deren radial äußeren Ende begrenzt.

Der Elektromotor 26 weist ferner einen Stator 44 auf, der mehrere elektrische Spulen 46 umfasst, die zu insgesamt drei Phasen mittels eines Verschaltungsrings 48 verschalten sind. Mittels des Verschaltungsrings 48 sind die elektrischen Phasen zu einer Dreiecksschaltung verschaltet. Die elektrischen Spulen 46 sind jeweils auf ein Blechpaket, die zu einer Kreisstruktur 50 zusammengesetzt gesetzt und zueinander stabilisiert sind. Die Achse jeder der elektrischen Spulen 46 ist hierbei jeweils auf einer radialen Geraden bezüglich der Längsachse 28 angeordnet.

Der Verschaltungsring 48 bildet eine der Stirnseiten des Stators 44 und mit diesem sind drei Phasenanschlüsse 52 elektrisch kontaktiert sowie daran-befestigt. Die Phasenanschlüsse 52 verlaufen parallel zur Längsachse 28 und sind zueinander bezüglich der Längsachse 28 um 120° versetzt. Jeder der Phasenanschlüsse 52 weist einen Kupferblechstreifen 54 auf, der jeweils mittels einer Halterungen 56 aus einem Kunststoff stabilisiert wird. Die Halterung 56 ist an einem entsprechenden aus einem Kunststoff gefertigten Teil des Verschaltungsrings 48 angeformt und einstückig mit diesem. Jeder der Kupferblechstreifen 54 ist mit jeweils einem zugeordneten, zur elektrischen Kontaktierung der elektrischen Spulen 46 herangezogenen elektrischen Leiter des Verschaltungsrings 48 elektrisch kontaktiert. Im Montagezustand ragt jeder Phasenanschluss 52, nämlich der jeweilige Kupferblechstreifen 54, durch jeweils einen zugeordneten Durchbruch 38 endseitig in das Elektronikfach 36.

Mittels des Stators 44 ist ein Rotor 58 umgeben, der ein Blechpaket sowie mehrere daran befestigte Permanentmagneten aufweist. Der Rotor 58 ist an einer Motorwelle 60 befestigt, die entlang der Längsachse 28 angeordnet ist. Die Motorwelle 60, der Rotor 58 sowie der Stator 44 sind hierbei konzentrisch zu der Längsachse 28 angeordnet. Die Motorwelle 28 ist mittels eines B-seitigen Lagers 62 sowie eines A-seitigen Lagers 64 drehbar um die Längsachse 28 gelagert. Das B-seitige Lager 62 ist an der Gehäusewand 32 geführt und somit ein Loslager. Hierfür ist das B-seitige Lager 62 in den Kranz 42 eingesetzt. Die Motorwelle 60 ragt dabei durch die Gehäusewand 32 hindurch in das Elektronikfach 36. Das A-seitige Lager 64 ist an einem A- seitigen Lagerschild 66 befestigt, mittels dessen das Motorfach 34 auf der der Gehäusewand 32 gegenüberliegenden Seite verschlossen ist. Das A-seitige Lagerschild 66 ist hierfür auf den Rand des Gehäuses 30 aufgesetzt und dort befestigt.

In dem Elektronikfach 36 ist eine Elektronik 70 angeordnet, die in Figur 4 nicht näher dargestellt ist. Die Elektronik 70 weist eine Leiterplatte 72 auf, auf der mehrere Halbleiterschalter 74 angeordnet sind, von denen zwei dargestellt sind. Die Halbleiterschalter 74 sind zu einer B6-Schaltung miteinander verschaltet, und die Ansteuerung der Halbleiterschalter 74 erfolgt mittels weiterer elektrische/elektronische Bauteile, die ebenfalls an der Leiterplatte 72 befestigt sind. Im Montagezustand sind die Phasenanschlüsse 52 elektrisch mit der Elektronik 70 kontaktiert, sodass eine Bestromung der elektrischen Spulen 46 mittels der Elektronik 70 erfolgen kann. Folglich dient die Elektronik 70 der Bestromung der elektrischen Spulen 46. Mit anderen Worten sind der Stator 44 und die Elektronik 70 mittels der Phasenanschlüsse 52 miteinander elektrisch kontaktiert.

Zwischen der Elektronik 70 und dem Stator 44 ist ein Trennelement 76 angeordnet, das senkrecht zur Längsachse 28 angeordnet ist. Dabei befindet sich das Trennelement 76 im Motorfach 34 und ist somit zwischen der Gehäusewand 32 und dem Stator 44 angeordnet. Das Trennelement 76 ist aus einer Folie erstellt und somit folienartig sowie an der Gehäusewand 32 angeklebt. Hierfür weist das Trennelement 76, wie in Figur 5 in einer Schnittdarstellung entlang der Längsachse 28 gezeigt, eine Klebeschicht 78 auf, die an der Gehäusewand 32 anhaftet. Auf der Klebeschicht 78 sind zwei Schichten 80 angebracht und übereinandergestapelt. Eine der Schichten 80 weist eine elektrisch abschirmende Wirkung auf. Hierfür ist diese Schicht 80 aus einem elektrisch leitenden Material erstellt sowie elektrisch mit Masse kontaktiert. Die weitere Schicht 80 weist eine magnetisch abschirmende Wirkung auf und ist aus einem Kunststoff gefertigt, in den diamagnetischen Partikel eingebracht sind. In einer nicht näher dargestellten Variante sind die beiden Schichten 80 nicht vorhanden.

Jedoch umfasst das Trennelement 76 stets eine elektrisch isolierende Schicht 82, die aus einer Polyesterfolie erstellt ist. Sofern die beiden Schichten 80 nicht vorhanden sind, ist somit lediglich die isolierende Schicht 82, also die Polyesterfolie, und die Klebeschicht 78 vorhanden.

Die Dicke der Trennelement 76 ist kleiner als 0,1 mm, und das Trennelement 76 ist biegeschlaff. Das Trennelement 76 weist einen ringförmigen Querschnitt auf, wobei der Außendurchmesser des Trennelements 76 geringfügig kleiner als der Innendurchmesser des Motorfachs 34, also des Gehäuses 32, und der Innendurchmesser geringfügig größer als der Außendurchmesser des Kranzes 42 ist. In den Umfang des Trennelement 76 sind mehrere Einkerbungen 83 eingebracht, die von nicht näher dargestellten Vorsprüngen der Gehäusewand 32 umgriffen werden. Somit ist ein Verdrehschutz realisiert.

Im Montagezustand sind mittels des Trennelement 76 die Durchbrüche 38 sowie die Gehäusewand 32 abgedeckt, und die Phasenanschlüsse 52 ragen somit durch das Trennelement 76 hindurch. Hierfür weist das Trennelement 76 drei Hauptschlitze 84 auf, die mittels Schneidens oder Stanzens in das Trennelement 26 eingebracht sind. Jeder der Hauptschlitze 84 verläuft im Wesentlichen radial bezüglich der Längsachse 28, und jedem der Hauptschlitze 84 ist jeweils einer der Phasenanschlüsse 52 zugeordnet. Somit ragt durch jeden der Hauptschlitze 84 jeweils einer der Phasenanschlüsse 52. In jeden der Hauptschlitze 84 münden jeweils zwei weitere Schlitze 86. dabei sind die beiden weiteren Schlitz 86 jeweils an gegenüberliegenden Enden des Hauptschlitze 84 angeordnet und verlaufen zu diesem schräg, also nicht parallel. Folglich ist mittels jedes der Hauptschlitze 84 und der zugehörigen weiteren Schlitze 86 eine Z-Form realisiert.

Aufgrund der isolierenden Schicht 82 wird auch bei einer Annäherung des Stators 44 an die Gehäusewand 32 ein Masseschluss verhindert, also ein Kurzschluss des Stators 44 über die Gehäusewand 32. Somit ist eine Sicherheit des Elektromotors 26 erhöht. Da zudem mittels des Trennelements 76 die Durchbrüche 38 teilweise abgedeckt sind, ist im Bereich der Phasenanschlüsse 52 ein Durchtritt von Partikel aus dem Motorfach 34 in das Elektronikfach 36 verhindert oder zumindest erschwert. Daher kann eine vergleichsweise kostengünstig Elektronik 70 verwendet werden. Auch ist mittels des biegeschlaffen Trennelements 76 ein Toleranzausgleich geschaffen. Um den Durchtritt de Partikel zu vermeiden, ist es lediglich erforderlich, die Durchbrüche 38 mittels des Trennelements 76 zumindest teilweise abzudecken. Sofern die Durchbrüche 38 vergleichsweise groß gewählt werden, ist es möglich, bei sowohl bei dem Gehäuse 30 als auch bei den Phasenanschlüssen 52 und dem Stator 44 vergleichsweise große Fertigungstoleranzen zu wählen, wobei dennoch der Partikeldurchtritt verhindert ist. Auch ist aufgrund der vergrößerten Durchbrüche 38 ein elektrischer Kurzschluss zwischen den Phasenanschlüssen 52 und der Gehäusewand 32 über den auf diese Weise gebildeten Luftspalt vermieden. Zudem ist aufgrund der zumindest teilweisen Luftdurchlässigkeit durch das Trennelement 76, zumindest im Bereich der Hauptschlitze 84, ein Luftdurchtritt ermöglicht, weswegen eine Entlüftung des Motorfachs 34 erfolgen kann.

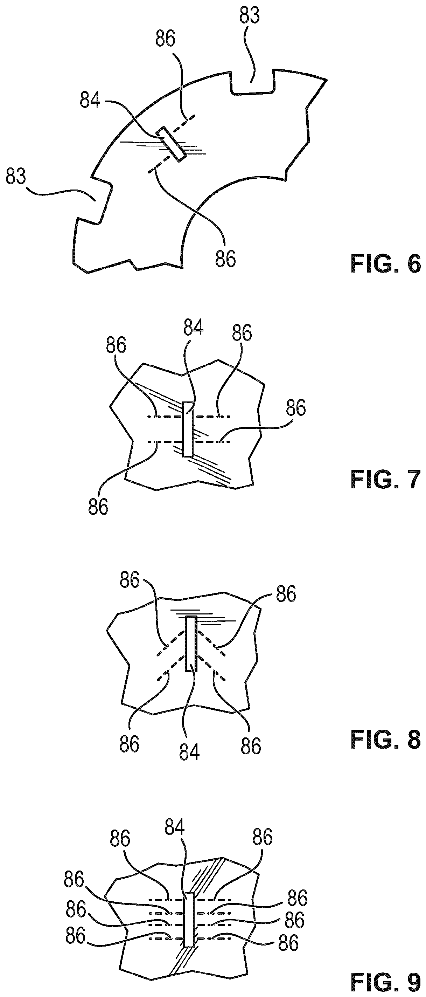

In Figur 6 ist eine Abwandlung des Trennelements 76 ausschnittsweise gezeigt. Hierbei verläuft der gezeigte Hauptschlitze 84, von denen wiederum drei vorhanden sind, weiterhin radial. Die beiden weiteren Schlitze 86 befinden sich auf gegenüberliegenden Längsseiten des Hauptschlitzes 84 und verlaufen zu diesem senkrecht. Somit ist auch dann, wenn die Phasenanschlüsse 52 vor Einführen nicht fluchtend mit dem Hauptschlitz 84 angeordnet sind, ein Durchführen durch das Trennelement 76 ermöglicht, ohne dass dieses unkontrolliert einreist. In weiteren, nicht näher dargestellten Varianten, sind die Einkerbungen 83 nicht vorhanden. Eine sonstige Abänderung erfolgt dabei zweckmäßigerweise nicht.

In Figur 7 ist ausschnittsweise eine weitere Alternative dargestellt. Dem gezeigten Hauptschlitz 84 sind nunmehr vier weitere Schlitze 86 zugeordnet, wobei sich jeweils zwei davon auf der gleichen Seite bezüglich des Hauptschlitze 84 befinden. Die weitere Schlitze 86 sind dabei senkrecht zu dem Hauptschlitz 84 angeordnet.

In Figur 8 ist eine Abwandlung der in Figur 7 dargestellten Variante gezeigt. Es sind wiederum die vier weiteren Schlitze 86 vorhanden, wobei diese jedoch bezüglich des Hauptschlitzes 84 um 45° geneigt sind. Somit ist ein Fischgerätmuster realisiert.

In Figur 9 ist eine weitere Alternative dargestellt. Jeder der Seiten des Hauptschlitzes 84 sind jeweils vier weitere Schlitze 86 zugeordnet, sodass insgesamt acht derartige weitere Schlitze 86 vorhanden sind.

## Patentansprüche

1. Elektromotor (26) für ein Kraftfahrzeug (4), insbesondere Lenkungsmotor, mit einem Gehäuse (30), das ein Motorfach (34) und ein Elektronikfach (36) aufweist, die mittels einer mehrere Durchbrüche (38) aufweisenden Gehäusewand (32) getrennt sind, wobei das Gehäuse (30) einstückig ist, wobei das Gehäuse (30) hohlzylindrisch ausgestaltet ist, wobei die Gehäusewand (32) senkrecht zu der Achse des Hohlzylinders angeordnet ist, wobei in dem Motorfach (34) ein Stator (44) und in dem Elektronikfach (36) eine Elektronik (70) angeordnet sind, die mittels Phasenanschlüssen (52) miteinander elektrisch kontaktiert sind, die durch die Durchbrüche (38) ragen, wobei zwischen dem Stator (44) und der Elektronik (70) ein Trennelement (76) angeordnet ist, mittels dessen die Durchbrüche (38) und die Gehäusewand (32) zumindest teilweise abgedeckt sind, wobei das Trennelement (76) folienartig ist.

2. Elektromotor (26) nach Anspruch 1,
**dadurch gekennzeichnet,**
**dass** das Trennelement (76) zwischen der Gehäusewand (32) und dem Stator angeordnet ist.

3. Elektromotor (26) nach Anspruch 1, oder 2,
**dadurch gekennzeichnet,**
**dass** das Trennelement (76) eine zu der Anzahl an Phasenanschlüssen (52) korrespondierende Anzahl an Hauptschlitzen (84) aufweist, wobei durch jeden der Hauptschlitze (84) einer der Phasenanschlüsse (52) ragt.

4. Elektromotor (26) nach Anspruch 3,
**dadurch gekennzeichnet,**
**dass** in jeden der Hauptschlitze (84) zumindest ein nicht parallel zu dem Hauptschlitz (84) verlaufender weiterer Schlitz (86) mündet.

5. Elektromotor (76) nach einem der Ansprüche 1 bis 4,
**dadurch gekennzeichnet,**
**dass** das Trennelement (76) eine Klebeschicht (78) aufweist die-an-der-Gehäusewand (32) anhaftet.

6. Elektromotor (26) nach einem der Ansprüche 1 bis 5,
**dadurch gekennzeichnet,**
**dass** das Trennelement (76) zumindest eine elektrisch isolierende Schicht (82) aufweist.

7. Elektromotor (26) nach einem der Ansprüche 1 bis 6,
**dadurch gekennzeichnet,**
**dass** das Trennelement (76) eine Schicht (80) aufweist, die eine elektrische und/oder magnetisch abschirmende Wirkung aufweist.

## Claims

1. Electric motor (26) for a motor vehicle (4), in particular steering motor, having a housing (30) comprising a motor compartment (34) and an electronics compartment (36) which are separated by means of a housing wall (32) having a plurality of openings (38), wherein the housing (30) is in one piece, wherein the housing (30) is of hollow-cylindrical design, wherein the housing wall (32) is arranged perpendicularly with respect to the axis of the hollow cylinder, wherein a stator (44) is arranged in the motor compartment (34) and an electronics system (70) is arranged in the electronics compartment (36), which are electrically contacted to each other by means of phase connections (52) which protrude through the openings (38), wherein a separating element (76) is arranged between the stator (44) and the electronics system (70), by means of which separating element the openings (38) and the housing wall (32) are at least partially covered, wherein the separating element (76) is film-like.

2. Electric motor (26) according to Claim 1,
**characterized**
**in that** the separating element (76) is arranged between the housing wall (32) and the stator.

3. Electric motor (26) according to Claim 1 or 2,
**characterized**
**in that** the separating element (76) has a number of main slots (84) corresponding to the number of phase connections (52), wherein one of the phase connections (52) extends through each of the main slots (84).

4. Electric motor (26) according to Claim 3,
**characterized**
**in that** at least one further slot (86) which does not run parallel to the main slot (84) opens into each of the main slots (84).

5. Electric motor (76) according to one of Claims 1 to 4,
**characterized**
**in that** the separating element (76) has an adhesive layer (78) which adheres to the housing wall (32).

6. Electric motor (26) according to one of Claims 1 to 5,
**characterized**
**in that** the separating element (76) has at least one electrically insulating layer (82).

7. Electric motor (26) according to one of Claims 1 to 6,
**characterized**
**in that** the separating element (76) has a layer (80) which has an electrically and/or magnetically shielding effect.

## Revendications

1. Moteur électrique (26) pour un véhicule automobile (4), en particulier un moteur de direction, avec un carter (30), qui comporte un compartiment moteur (34) et un compartiment électronique (36), qui sont séparés au moyen d'une paroi (32) de carter comportant plusieurs ajours (38), le carter (30) étant monobloc, le carter (30) étant configuré de manière cylindrique creuse, la paroi (32) de carter étant disposée perpendiculairement à l'axe du cylindre creux, un stator (44) étant disposé dans le compartiment moteur (34) et un système électronique (70) étant disposé dans le compartiment électronique (36), lesquels sont mis en contact électrique l'un avec l'autre au moyen de bornes de phase (52), qui dépassent à travers les ajours (38), un élément de séparation (76) étant disposé entre le stator (44) et le système électronique (70), au moyen duquel les ajours (38) et la paroi (32) de carter sont recouverts au moins en partie, l'élément de séparation (76) étant de type feuille.

2. Moteur électrique (26) selon la revendication 1,
**caractérisé en ce**
**que** l'élément de séparation (76) est disposé entre la paroi (32) de carter et le stator.

3. Moteur électrique (26) selon la revendication 1 ou 2,
**caractérisé en ce**
**que** l'élément de séparation (76) comporte un nombre de fentes principales (84) correspondant au nombre de bornes de phase (52), l'une des bornes de phase (52) dépassant à travers chacune des fentes principales (84).

4. Moteur électrique (26) selon la revendication 3,
**caractérisé en ce**
**qu'**au moins une autre fente (86) ne s'étendant pas parallèlement à la fente principale (84) débouche dans chacune des fentes principales (84).

5. Moteur électrique (76) selon l'une des revendications 1 à 4,
**caractérisé en ce**
**que** l'élément de séparation (76) comporte une couche adhésive (78), qui adhère à la paroi (32) de carter.

6. Moteur électrique (26) selon l'une des revendications 1 à 5,
**caractérisé en ce**
**que** l'élément de séparation (76) comporte au moins une couche électriquement isolante (82).

7. Moteur électrique (26) selon l'une des revendications 1 à 6,
**caractérisé en ce**
**que** l'élément de séparation (76) comporte une couche (80), qui présente un effet de blindage électrique et/ou magnétique.
